(19) Europäisches Patentamt
European Patent Office
Office européen des brevets

(11) **EP 3 933 711 A1**

(12) **EUROPEAN PATENT APPLICATION**

(43) Date of publication:
**05.01.2022   Bulletin 2022/01**

(51) Int Cl.:
***G06N 3/08*** *(2006.01)*

(21) Application number: **20214977.9**

(22) Date of filing: **17.12.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2020   US 202063046720 P
15.12.2020   US 202017121802**

(71) Applicant: **Intel Corporation
Santa Clara, CA 95054 (US)**

(72) Inventors:
• **CHOI, Yang-Seok
  Portland, OR 97229 (US)**
• **CHOI, Jeongsik
  San Jose, CA 95131 (US)**

(74) Representative: **Viering, Jentschura & Partner
mbB
Patent- und Rechtsanwälte
Am Brauhaus 8
01099 Dresden (DE)**

(54) **MACHINE LEARNING TECHNIQUES FOR LOCATION TRACKING**

(57)   A device including one or more processors configured to obtain an motion dataset of the device; generate one or more parameters for a machine learning algorithm based on the motion dataset; generate a predicted device trajectory using the machine learning algorithm; determine an error value of the machine learning algorithm using a cost function, wherein the error value is based on a difference between the predicted device trajectory and a reference trajectory; adjust the cost function to minimize the error value; generate one or more optimized parameters based on the adjusted cost function; and adjust the machine learning algorithm based on the one or more optimized parameters.

FIG 3

## Description

### Technical Field

Various aspects relate generally to methods and systems for location tracking with the use of Wi-Fi ranging and sensor data.

### Background

Wireless communication devices often use 802.11 technology to communicate over a wireless network. The wireless network may include access points (AP) and/or base stations. Wireless communication devices may determine a device location or trajectory using Wi-Fi ranging techniques. Wi-Fi ranging may include determining a distance between the wireless communication device and one or more APs of the wireless network. Additionally, wireless communication devices may include inertial sensors. Wireless communication devices may also determine a device location or trajectory based on inertial sensor measurements or outputs. Location tracking may be improved using Wi-Fi ranging techniques and inertial sensor measurements in conjunction with each other.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects of the invention are described with reference to the following drawings.

FIG. 1 shows an exemplary wireless communication channel network according to some aspects.
FIG. 2 shows an exemplary wireless communication device according to some aspects.
FIG. 3 shows an exemplary flowchart for estimating a device trajectory according to some aspects.
FIG. 4 shows an exemplary chart comparing wireless communication device trajectory estimations according to some aspects.
FIG. 5 shows an exemplary flowchart for estimating a device trajectory according to some aspects.
FIG. 6 shows an exemplary coordinate systems according to some aspects.
FIG. 7 shows an exemplary representation of a machine learning technique to estimate a trajectory according to some aspects.
FIGS. 8A and 8B show an exemplary illustration of defining a cost function according to some aspects.
FIGS. 9A and 9B show an exemplary result of an experiment for determining location according to some aspects.
FIG. 10 shows an exemplary application interface for determining wireless communication device location according to some aspects.
FIG. 11 shows an exemplary result of an experiment of determining location according to some aspects.
FIG. 12 shows an exemplary method of performing wireless communication device location tracking according to some aspects.

### Detailed Description

The following detailed description refers to the accompanying drawings that show, by way of illustration, specific details and aspects in which the invention may be practiced.

The word "exemplary" is used herein to mean "serving as an example, instance, or illustration." The words "plurality" and "multiple" in the description and claims refer to a quantity greater than one. The terms "group," "set", "sequence," and the like refer to a quantity equal to or greater than one. Any term expressed in plural form that does not expressly state "plurality" or "multiple" similarly refers to a quantity equal to or greater than one. The term "lesser subset" refers to a subset of a set that contains less than all elements of the set. Any vector and/or matrix notation utilized herein is exemplary in nature and is employed for purposes of explanation. Aspects of this disclosure described with vector and/or matrix notation are not limited to being implemented with vectors and/or matrices and the associated processes and computations may be performed in an equivalent manner with sets or sequences of data or other information.

As used herein, "memory" is understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers.

The term "station" or "STA" as utilized herein refers to a network device that is capable of using WLAN/Wi-Fi technology (e.g., according to any IEEE 802.11 standard). "STA" can include mobile or immobile wireless communication devices, including Access Points (APs), User Equipments (UEs), smart televisions, tablets, laptops, personal computers, wearables, multimedia playback and other handheld or body-mounted electronic devices, consumer/home/office/commercial appliances, vehicles, and any other electronic device capable of Wi-Fi communications.

The term "Wi-Fi sensing" (also referred to as "wireless sensing" or "WLAN sensing") may refer to a usage of wireless technology to detect changes in an environment. For example, WLAN sensing is the use of IEEE 802.11 technology to enable WLANs and electronic devices with WLAN capability to obtain channel measurements that characterize the environment in which they are located, thus gaining spatial and contextual awareness of their surroundings, and enable applications such as presence and proximity detection, device-free positioning, and gesture classification, among many others. Wi-Fi sensing applications may support in both 2.4/5/6 GHz and 60 GHz.

The term "Wi-Fi ranging" may refer to measuring a signal from a plurality of stations to determine a wireless communication device location. For example, trilateration techniques may measure a distance from three or more APs using Wi-Fi signal measurements. The signal measurements may include Time-Of-Arrival (TOA), Time-Difference-Of-Arrival (TDOA), Angle-Of-Arrival (AOA), Round Trip, and Received Signal Strength (RSS) of a Wi-Fi signal.

The term "model" as used herein may be understood as any kind of algorithm, which provides output data from input data. For example, an algorithm generating or calculating a wireless communication device location from sensor information and/or Wi-Fi ranging information.

Some aspects may be used in conjunction with devices and/or networks operating in accordance with existing IEEE 802.11 standards. For example, IEEE 802.11-2016 and IEEE 802.11az, and/or future versions and/or derivatives thereof. Some aspects may be used in conjunction with a WLAN, e.g., a Wi-Fi network or any other suitable wireless communication network, for example, a wireless area network, a "piconet", a WPAN, a WVAN for example.

Additionally, devices and/or networks operating in accordance with existing technology and/or protocols, e.g., 3rd Generation Partnership Project (3GPP), 3GPP Long Term Evolution (LTE), WFA Peer-to-Peer (P2P) specifications (Wi-Fi_33 P2P technical specification, version 1.7, July 6, 2016), Radio Frequency (RF), Infrared (IR), Frequency-Division Multiplexing (FDM), Orthogonal FDM (OFDM), Orthogonal Frequency-Division Multiple Access (OFDMA), Time-Division Multiplexing (TDM), Time-Division Multiple Access (TDMA), Multi-User MIMO (MU-MIMO), Spatial Division Multiple Access (SDMA), Extended TDMA (ETDMA), General Packet Radio Service (GPRS), Extended GPRS, Code-Division Multiple Access (CDMA), Wideband CDMA (WCDMA), CDMA 2000, singlecarrier CDMA, multi-carrier CDMA, Multi-Carrier Modulation (MCM), Discrete Multi-Tone (DMT), Bluetooth®, Global Positioning System (GPS), Global Navigation Satellite System (GNSS), Wi-Fi, Wi-Max, ZigBeeTM, Ultra-Wideband (UWB), Global System for Mobile communication (GSM), 2G, 2.5G, 3G, 3.5G, 4G, Fifth Generation (5G), or Sixth Generation (6G) mobile networks, 3GPP, Long Term Evolution (LTE), LTE Advanced, Enhanced Data rates for GSM Evolution (EDGE), and/or future versions and/or derivatives thereof, may be used in conjunction with some aspects.

Various aspects herein may utilize one or more machine learning models to perform or control functions of the vehicle (or other functions described herein). The term "model" as, for example, used herein may be understood as any kind of algorithm, which provides output data from input data (e.g., any kind of algorithm generating or calculating output data from input data). A machine learning model may be executed by a computing system to progressively improve performance of a specific task. In some aspects, parameters of a machine learning model may be adjusted during a training phase based on training data. A trained machine learning model may be used during an inference phase to make predictions or decisions based on input data. In some aspects, the trained machine learning model may be used to generate additional training data. An additional machine learning model may be adjusted during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to predict the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects described herein may utilize one or more classification models. In a classification model, the outputs may be restricted to a limited set of values (e.g., one or more classes). The classification model may output a class for an input set of one or more input values. An input set may include sensor data, such as image data, radar data, LIDAR data and the like. A classification model as described herein may, for example, classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (illustratively, starting from or using an input set of one or more values). References herein to regression models may contemplate a model that implements, e.g., any one or more of the following techniques (or other suitable techniques): linear regression, decision trees, random forest, or neural networks.

A machine learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network may include any number of layers. The training of the neural network (e.g., adapting the layers of the neural network) may use or may be based on any kind of training principle, such as backpropagation (e.g., using the backpropagation algorithm).

Throughout the present disclosure, the following terms may be used as synonyms: driving parameter set, driving model parameter set, safety layer parameter set, driver assistance, automated driving model parameter set, and/or the like (e.g., driving safety parameter set). These terms may correspond to groups of values used to implement one or more models for directing a vehicle to operate according to the manners described herein.

Furthermore, throughout the present disclosure, the following terms may be used as synonyms: driving parameter, driving model parameter, safety layer parameter, driver assistance and/or automated driving model parameter, and/or the like (e.g., driving safety parameter), and may correspond to specific values within the previously described sets.

This disclosure includes indoor positioning techniques based on Wi-Fi ranging and inertial sensor measurements. Both Wi-Fi ranging techniques and inertial sensor measurements alone may be used to track the location of a wireless communication device. Algorithms using Wi-Fi ranging techniques or inertial sensor measurements may use ground truth data as a reference to improve the accuracy of location tracking. However, ground truth data may require significant time and effort to collect, incur costs, or may not be widely available. Precise location tracking without requiring ground truth data, or any other external data would reduce the effort needed to track a wireless communication device's location.

A self-contained solution for tracking a wireless communication device's location is disclosed. As previously stated, wireless communication devices may include both Wi-Fi capabilities and inertial sensors. Machine learning techniques may be used to accurately track a wireless communication device location using both Wi-Fi signal measurements and inertial sensor measurements. For example, an unsupervised learning algorithm may train data from the inertial sensor measurements using unlabeled Wi-Fi ranging data. Alternatively, an unsupervised learning algorithm may train Wi-Fi ranging data using unlabeled inertial sensor measurement data. These machine learning algorithms do not require ground truth measurements reducing resources required to accurately predict a wireless communication device trajectory. As disclosed, the self-contained solution for a wireless communication device accurately predicts the location of a wireless communication device without requiring external or ground truth data.

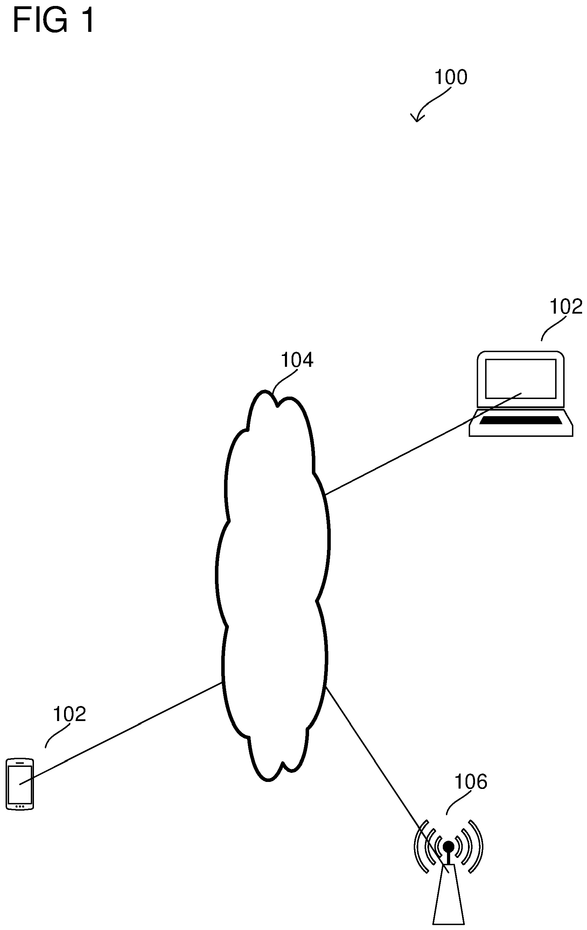

FIG. 1 depicts an exemplary network for wireless communication according to some aspects. Wireless communication network 100, such as a Wi-Fi network, may include one or more wireless communication devices 102 communicating via wireless medium 104. Wireless communication device 102 may be capable of communicating content, data, information and/or signals via a wireless medium 104. Devices 102 may operate as, and/or perform the functionality of one or more Wi-Fi STAs. Device 102 may communicate with AP 106 through wireless medium 104. Device 102 may communicate with multiple APs simultaneously or concurrently on the same or different channels. The ability to obtain multiple measurements from/to multiple APs or stations is key for Wi-Fi ranging.

According to some aspects, wireless medium 104 may include, for example a, radio channel, cellular channel, GNSS channel, UWB channel, Global Positioning System GPS channel, RF channel, Wi-Fi channel, Infrared (IR) channel, among others.

According to some aspects, wireless communication medium 104 may include a 2.4GHz frequency band, 5GHz frequency band, millimeterWave (mmWave) frequency band, 60GHz frequency band, Sub1GHz (S1G) band, and/or one or more other wireless communication frequency bands.

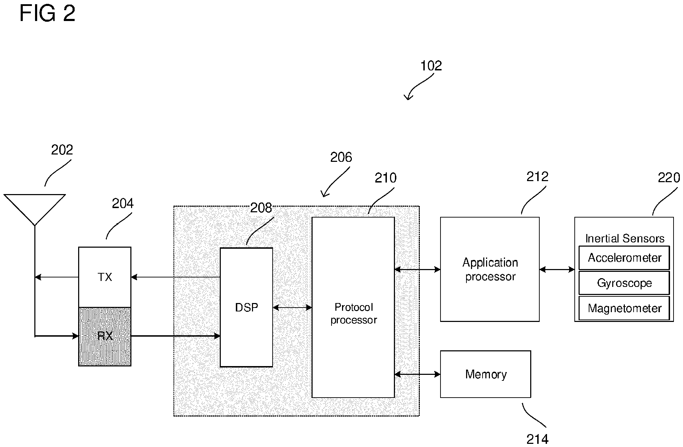

FIG. 2 shows an internal configuration of wireless communication device 102 according to some aspects. Wireless communication device 102 may include antenna system 202, transceiver 204, baseband modem 206 (including digital signal processor 208 and protocol controller 210), application processor 212, and memory 214. Although not explicitly shown in FIG. 2, in some aspects wireless communication device 102 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Wireless communication device 102 may transmit and receive radio signals on one or more radio access networks. Baseband modem 206 may direct this communication functionality of device 102 according to the communication protocols associated with each radio access network. Baseband modem 206 may thus control antenna system 202 and transceiver 204 to transmit and receive radio signals according to the formatting and scheduling parameters for the communication protocols. In some aspects where device 102 is configured to operate on multiple radio communication technologies, device 102 may include separate communication components for each supported radio communication technology (e.g., a separate antenna, RF transceiver, digital signal processor, and controller).

Device 102 may transmit and receive wireless signals with antenna system 202, which may be a single antenna or an antenna array that includes multiple antennas. In some aspects, antenna system 202 may additionally include analog antenna combination and/or beamforming circuitry. In the receive (RX) path, transceiver 204 may receive analog radio frequency signals from antenna system 202 and perform analog and digital RF front-end processing on the analog radio frequency signals to produce digital baseband samples (e.g., In-Phase/Quadrature (IQ) samples) for baseband modem 206. Transceiver 204 may include analog and digital reception components including amplifiers (e.g., Low Noise Amplifiers (LNAs)), filters, RF demodulators (e.g., RF IQ demodulators)), and analog-to-digital converters (ADCs), with which transceiver 204 may convert the received radio frequency signals to digital baseband samples. In the transmit (TX) path, transceiver 204 may receive digital baseband samples from baseband modem 206 and perform analog and digital RF front-end processing on the digital baseband samples to produce analog radio frequency signals for antenna system 202 to wirelessly transmit. Transceiver 204 may include analog and digital transmission components including amplifiers (e.g., Power Amplifiers (PAs), filters, RF modulators (e.g., RF IQ modulators), and digital-to-analog converters (DACs), which transceiver 204 may utilize to mix the digital baseband samples received from baseband modem 206 and produce the analog radio frequency signals for wireless transmission by antenna system 202. In some aspects baseband modem 206 may control the radio transmission and reception of transceiver 204. This may include specifying radio frequencies for transceiver 204 to transmit or receive on.

As shown in FIG. 2, baseband modem 206 may include digital signal processor 208, which may perform physical layer (PHY; Layer 1) transmission and reception processing. In the transmit path, digital signal processor 208 may prepare outgoing transmit data (from protocol controller 210) for transmission via transceiver 204. In the receive path, digital signal processor 208 may prepare incoming received data (from transceiver 204) for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g.,

ASICs, FPGAs, and other hardware) that are digitally configured to specific execute processing functions. The one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Device 102 may be configured to operate according to one or more communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the communication components of device 102 (antenna system 202, transceiver 204, and digital signal processor 208) according to the communication protocols of each supported radio communication technology. In some aspects, protocol controller 210 may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of device 102 to transmit and receive communication signals according to the protocol stack control logic in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to transfer application layer data to and from device 102 with the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Device 102 may also include application processor 212 and memory 214. Application processor 212 may be a CPU configured to handle the layers above the protocol stack, including the transport and application layers. Application processor 212 may be configured to execute various applications and/or programs of device 102 at an application layer of device 102. These applications and/or programs may include an operating system (OS), a user interface (UI) for supporting user interaction with device 102, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to transceiver 204. Transceiver 204 may then process the digital baseband samples to convert the digital baseband samples to analog RF signals, which transceiver 204 may wirelessly transmit via antenna system 202. In the receive path, transceiver 204 may receive analog RF signals from antenna system 202 and process the analog RF signals to obtain digital baseband samples. Transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of device 102, such as a hard drive or another such permanent memory device. Although not explicitly depicted in FIG. 2, the various other components of device 102 shown in FIG. 2 may additionally each include integrated permanent and non-permanent memory components, such as for storing software program code, buffering data, etc.

Inertial sensors 220 may provide information about the movement or orientation of the wireless communication device 102. For example, a change in device orientation. However, low-power and low-cost sensors 220 on the wireless communication device 102 may be based on MEMS (Micro-Electro-Mechanical System) technology. MEMS technology sensor may produce noisy measurements as compared to physical sensors. Measurements from MEMS sensors may need to account for accumulated noise when predicting the trajectory of a wireless communication device.

A parameterized machine learning algorithm may be used to predict a device trajectory. The predicted trajectory may be compared to a reference trajectory. A cost function may minimize the error between the reference trajectory and the predicted trajectory and further optimize the parameters of the parameterized machine learning algorithm. The optimized parameters may be back propagated to the machine learning algorithm to more accurately predict the trajectory.

For example, a machine learning algorithm using Wi-Fi signal measurements to predict a trajectory may use a trajectory based on sensor measurements as unlabeled data to train the machine learning algorithm. Alternatively, a machine learning algorithm using sensor measurements to predict a trajectory may use a trajectory based on Wi-Fi signal measurements as unlabeled data to train the machine learning algorithm.

Without required ground truth data, location tracking requires significantly less human intervention. A cost function may train data of a neural network (NN) and optimize parameters of a machine learning technique based on coarse trajectory estimation results of a further machine learning technique.

Trajectory estimates based on Wi-Fi ranging alone may closely follow the true trajectory of the wireless communication device, but have an erratic pattern. Trajectory estimates based on inertial sensor measurements alone may determine a path substantially the same as the true trajectory of the wireless communication device, but have a different starting position. A wireless communication device comprising a pedestrian dead reckoning (PDR) module and Wi-Fi module may use both techniques in conjunction to more accurately estimate the trajectory of the wireless communication device.

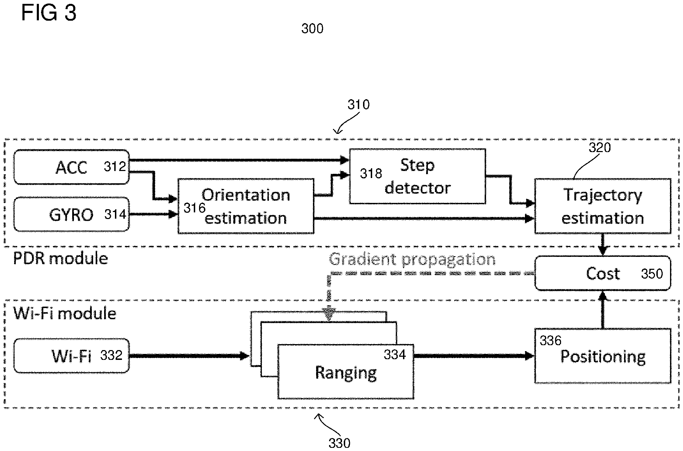

FIG. 3 shows a method 300 of training Wi-Fi ranging data with unlabeled inertial sensor measurement data. Wi-Fi ranging may measure distances from nearby Wi-Fi access points (APs), to estimate the position of the wireless communication device using trilateration techniques. For example, measuring the distance between the wireless communication device and at least three APs. Precise Wi-Fi ranging is a key factor to improve the positioning accuracy.

FIG. 3 shows a block diagram of a method 300 of predicting the trajectory of a wireless communication device. Method 300 may include pedestrian dead reckoning (PDR) module 310 and Wi-Fi module 330. Wi-Fi module 330 may include a Wi-Fi communication device 332, a plurality of ranging modules 334, and a positioning application 336. Each ranging module 334 may include multiple parameters for a machine learning algorithm. The multiple parameters may require optimization. A ranging module 334 may be implemented between the Wi-Fi communication device 332 and one of multiple APs to determine the distance between the AP and the wireless communication device. The positioning application 336 may take the output of ranging modules 334 to determine a wireless communication device trajectory over time.

Additionally, PDR module 310 may include sensors, such as accelerometer 312 and gyroscope 314, orientation estimator 316, step detector 318, and trajectory estimation application 320. Other sensors may be included in PDR module 310.

Both trajectory estimation application 320 and positioning application 336 may predict trajectories of the wireless communication device. Cost function 350 may compare the trajectory estimate from positioning application 336 to the trajectory estimate from trajectory estimation application 320. Cost function 350 may optimize parameters for the machine learning algorithm of ranging module(s) 334 based on the comparison of trajectory estimate from positioning application 336 to the trajectory estimate from trajectory estimation application 320. The optimized parameters are back propagated to the ranging modules 334.

The ranging modules 334 may include a neural network with a parametric machine learning algorithm. For example, a machine learning technique for training the Wi-Fi ranging modules with sensor measurement data may be represented by equations below. The input-output relationship of the Wi-Fi ranging module is represented as a parametric function as follows:

$$F(X;\varTheta) = \left[\hat{d}, \hat{s}\right]^{T}$$

where $X$ represents any source for the ranging process, such as, a received signal strength (RSS) or channel state information (CSI) from an AP. The ranging module $R(\cdot)$ can be implemented using a model or neural networks (NNs) which may include the set of parameters denoted by $\varTheta$. The two outputs of the ranging module may be a distance estimate from the AP denoted by $d\hat{}$ and the standard deviation of distance estimate, which is denoted by $\hat{s}$. $T$ represents the transpose operation of the matrix (vector). Depending on the parameters, the ranging module may produce different outputs with respect to the same input.

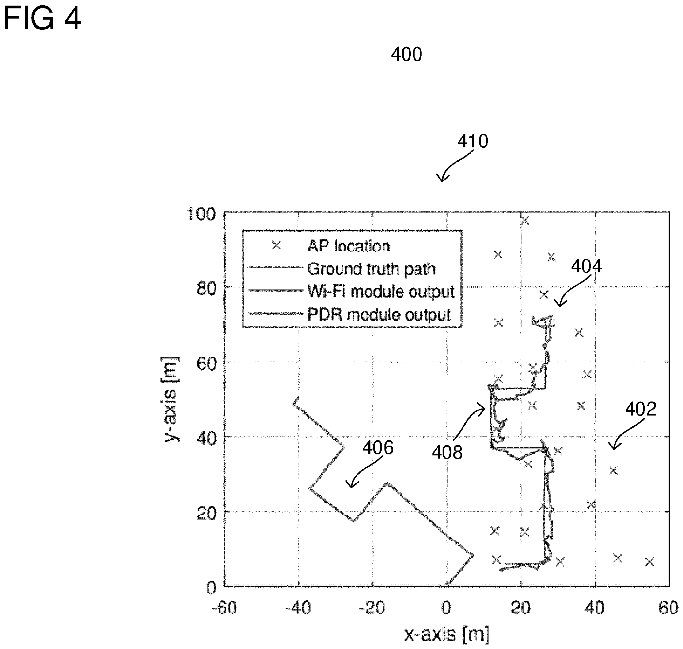

Using the ranging module, one can have ranging results from nearby APs, and estimate the position of the device. In this case, $\mathbf{z}^{(k)} = [x(k), y(k)]^{T}$ is denoted as the estimated x, y coordinates of the device at time step k. As the ranging results depend on the set of parameters $\varTheta$, the estimated trajectory $\mathbf{z}^{(k)}$ also widely varies depending on $\varTheta$. At the same time, inertial sensors estimate the trajectory of the device using the PDR technique. Further, $\mathbf{p}^{(k)}$ is denoted as the estimated x, y coordinates of the device at time step k using the PDR technique. For example, the PDR technique described with respect to FIG. 4.

FIG. 4 shows an example step of comparing a trajectory based on Wi-Fi measurement data with a trajectory based on inertial sensor measurement data to more accurately predict the trajectory of a wireless communication device.

Ranging modules 334 produce ranging errors when estimating a wireless communication device trajectory using the Wi-Fi module. Nevertheless, positioning application 336 of the Wi-Fi module 330 may estimate the trajectory of the wireless communication device using the output of ranging modules 334. Ranging modules 334 may generate output to estimate the trajectory 404 (the erratic trajectory) using nearby APs 402. The estimated trajectory may be erratic, but generally follow the true path as shown by comparing trajectory 404 (Wi-Fi based trajectory) and true path 408. The estimated trajectory may follow the ground truth path 408 as shown by the straight lined path. While the estimated trajectory may be erratic it generally follows the ground truth path. However, including sensor measurement data to predict a trajectory may result in a more accurate trajectory estimate.

The PDR module 310 may generate a smoother estimated trajectory 406 because sensor measurements are less affected by the external environment as compared to Wi-Fi ranging. The PDR module 310 may generate a trajectory shape which is almost the same as the shape of the ground truth path 408. However, the estimated trajectory 406 using the PDR module 310 may start at an arbitrary point and move at a direction which is not aligned with the ground truth path.

To address this issue, the PDR output must be transformed with a rotation angle and an offset as

$$\widetilde{\mathbf{p}}^{(k)} = \mathbf{R}(\varphi)\mathbf{p}^{(k)} + \mathbf{\Omega}, \qquad 1 \le k \le K$$

where $\Omega = [\Omega x, \Omega y]^T$ represents the x, y coordinate offsets and $\varphi$ is a rotation angle. $\mathbf{R}(\varphi)$ indicates the rotation operation in the x-y plane, which is defined as:

$$\mathbf{R}(\varphi) = \begin{bmatrix} \cos \varphi & -\sin \varphi \\ \sin \varphi & \cos \varphi \end{bmatrix} = \cos \varphi \, I_2 + \sin \varphi \, \widetilde{I_2}$$

where $\mathbf{I}_2$ is the 2x2 identity matrix and $\widetilde{\mathbf{I}}_2$ is defined by:

$$\widetilde{I_2} = \begin{bmatrix} 0 & -1 \\ 1 & 0 \end{bmatrix}.$$

A cost function may be used to optimize the parameters of the machine learning algorithm of Wi-Fi ranging modules 334. For example, a transformation that minimizes a cost function defined as follows may produce optimal parameters:

$$J\left(\{\mathbf{z}^{(k)}\}, \{\mathbf{p}^{(k)}\}; \varphi, \mathbf{\Omega}\right) = \sum_{k=1}^{K} \left\| \widetilde{\mathbf{p}}^{(k)} - \mathbf{z}^{(k)} \right\|^2$$

The offset that minimizes the above cost function should satisfy the following relationship:

$$\frac{\partial J\left(\{\mathbf{z}^{(k)}\}, \{\mathbf{p}^{(k)}\}; \varphi, \mathbf{\Omega}\right)}{\partial \mathbf{\Omega}} = \sum_{k=1}^{K} 2(\widetilde{\mathbf{p}}^{(k)} - \mathbf{z}^{(k)}) = \begin{bmatrix} 0 \\ 0 \end{bmatrix}$$

From the above relationship, an optimal offset is derived as

$$\mathbf{\Omega}^*(\varphi) = \frac{1}{K} \sum_{k=1}^{K} \left(\mathbf{z}^{(k)} - \mathbf{R}(\varphi)\mathbf{p}^{(k)}\right)$$

The optimal offset may widely vary depending on the rotation angle. If one substitutes the optimal offset into the original cost function, one has the following relationship:

$$J\left(\{\mathbf{z}^{(k)}\}, \{\mathbf{p}^{(k)}\};\ \varphi, \Omega^*(\varphi)\right) =$$

$$\sum_{k=1}^{K} \left\|\mathbf{z}^{(k)}\right\|^2 + \left\|\mathbf{p}^{(k)}\right\|^2 - \frac{\left\|\sum_{k=1}^{K} \mathbf{z}^{(k)}\right\|^2 + \left\|\sum_{k=1}^{K} \mathbf{p}^{(k)}\right\|^2}{K} + 2J(\varphi)$$

where $J(\varphi)$ contains all terms related to the rotation angle $\varphi$ as:

$$J(\varphi) = \frac{\left(\sum_{k=1}^{K} \mathbf{z}^{(k)}\right)^T \mathbf{R}(\varphi)\left(\sum_{k=1}^{K} \mathbf{p}^{(k)}\right)}{K} - \sum_{k=1}^{K} \left(\mathbf{z}^{(k)}\right)^T \mathbf{R}(\varphi)\left(\mathbf{p}^{(k)}\right)$$

$$= \left(\frac{\left(\sum_{k=1}^{K} \mathbf{z}^{(k)}\right)^T \left(\sum_{k=1}^{K} \mathbf{p}^{(k)}\right)}{K} - \sum_{k=1}^{K} \left(\mathbf{z}^{(k)}\right)^T \left(\mathbf{p}^{(k)}\right)\right) \cos\varphi$$

$$+ \left(\frac{\left(\sum_{k=1}^{K} \mathbf{z}^{(k)}\right)^T \tilde{\mathbf{I}}_2 \left(\sum_{k=1}^{K} \mathbf{p}^{(k)}\right)}{K} - \sum_{k=1}^{K} \left(\mathbf{z}^{(k)}\right)^T \tilde{\mathbf{I}}_2 \left(\mathbf{p}^{(k)}\right)\right) \sin\varphi$$

For ease of exposition, $\Gamma$ and $\tilde{\Gamma}$ were denoted as:

$$\Gamma = \left(\frac{\left(\sum_{k=1}^{K} \mathbf{z}^{(k)}\right)^T \left(\sum_{k=1}^{K} \mathbf{p}^{(k)}\right)}{K} - \sum_{k=1}^{K} \left(\mathbf{z}^{(k)}\right)^T \left(\mathbf{p}^{(k)}\right)\right)$$

$$\tilde{\Gamma} = \left(\frac{\left(\sum_{k=1}^{K} \mathbf{z}^{(k)}\right)^T \tilde{\mathbf{I}}_2 \left(\sum_{k=1}^{K} \mathbf{p}^{(k)}\right)}{K} - \sum_{k=1}^{K} \left(\mathbf{z}^{(k)}\right)^T \tilde{I_2} \left(\mathbf{p}^{(k)}\right)\right)$$

Then, $J(\varphi)$ can be expressed as below:

$$J(\varphi) = \Gamma \cos\varphi + \tilde{\Gamma} \sin\varphi \geq \sqrt{\Gamma^2 + \tilde{\Gamma}^2}\ \cos(\varphi - \psi) \geq -\sqrt{\Gamma^2 + \tilde{\Gamma}^2}$$

where $\psi = \arctan \frac{\Gamma}{\tilde{\Gamma}}$. One condition for the equality is $\varphi - \psi = \pi$. Therefore, an optimal angle and offset that minimize the original cost function is expressed by:

$$\varphi^* = \pi + \arctan \frac{\Gamma}{\tilde{\Gamma}},\quad \Omega^* = \Omega^*(\varphi^*).$$

The processes previously discussed may be used to find the optimal transformation that transforms one trajectory to the other trajectory. The transformed trajectory may be compared to the reference trajectory to calculate the mean square error (MSE) between the transformed trajectory and the reference trajectory to compare the shape of the two trajectories.

For example, using estimated trajectory determined using sensor measurement data in the training phase of ranging modules 334. The training cost with sensors is defined as:

$$J^{sen} = J\left(\left\{\mathbf{z}^{(k)}\right\}, \left\{\mathbf{p}^{(k)}\right\}; \; \varphi^*, \Omega^*\right)$$

with an optimal rotation angle and offset $\varphi^*$ and $\Omega^*$ respectively. Additionally, one can reuse the geometric cost function such that the cost function only uses the Wi-Fi ranging results as:

$$J^{geo} = \sum_{k=1}^{K} \sum_{n=1}^{N} \left(\left\|\mathbf{z}^{(k)} - \mathbf{z}_n^{(k)}\right\| - d_n^{(k)}\right)^2$$

where $\mathbf{z}_n^{(k)}$ represents the position of the $n$-th AP used at time step $k$ and $d_n^{(k)}$ is the estimated distance from this AP using the ranging module. By combining the two training cost functions, one can obtain a unified cost function for training defined as:

$$J\left(\left\{\mathbf{z}^{(k)}\right\}, \left\{\mathbf{p}^{(k)}\right\}\right) = \mu_1 J^{sen} + \mu_2 J^{geo}$$

where $\mu 1$ and $\mu 2$ are non-negative constants that balance between the two cost functions. One can train the Wi-Fi ranging module to minimize this unified cost function.

A wireless communication device may use indoor positioning techniques based on Wi-Fi ranging. By measuring distances from at least three nearby Wi-Fi access points (APs), the position of mobile devices can be obtained using so called trilateration techniques. Therefore, precise ranging is a key factor to improve the positioning accuracy.

Wireless propagation channel in indoor environments are too complex and diverse, and thus, an optimal ranging strategy widely varies depending on the environment. For this reason, service providers require manual site surveys to investigate the characteristic of each environment. As previously stated, site surveys to collect ground truth data may require too much time and effort. Examples of equipment that is used for site survey processes may include positioning solutions, Segway, humans equipped with LIDAR equipment, among others. Using this equipment, ground truth distance from each AP (or equivalently ground truth coordinates of mobile devices) may be obtained for each indoor site.

Unsupervised learning techniques that optimize parameters of a machine learning algorithm do not require ground truth data. For example, a NN using Wi-Fi measurements to estimate a trajectory may exploit unlabeled training data, such as sensor measurement data.

The Wi-Fi ranging module has multiple parameters that may need to be optimized. No matter whether the ranging module is well trained or not, it may estimate the distance from nearby APs, and the position of a device can be obtained using ranging results. At the same time, sensors may separately estimate the trajectory of the device. By comparing two estimated trajectories using Wi-Fi and sensors, one can design a cost function that may be used for optimizing parameters in the ranging module using the backpropagation technique.

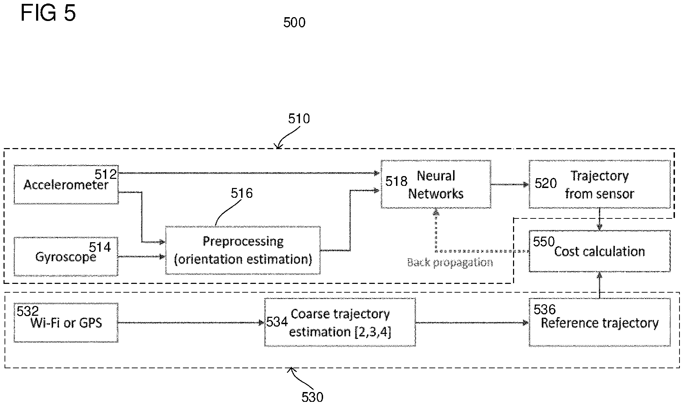

FIG. 5 shows a block diagram of a method 500 of predicting the trajectory of a wireless communication device. Method 500 may be similar to method 300 of FIG. 3, however cost function 550 may optimize parameters for step detector/neural network 518. For example, the estimated trajectory from Wi-Fi module 530 may be used as a reference trajectory to train the step detector 518.

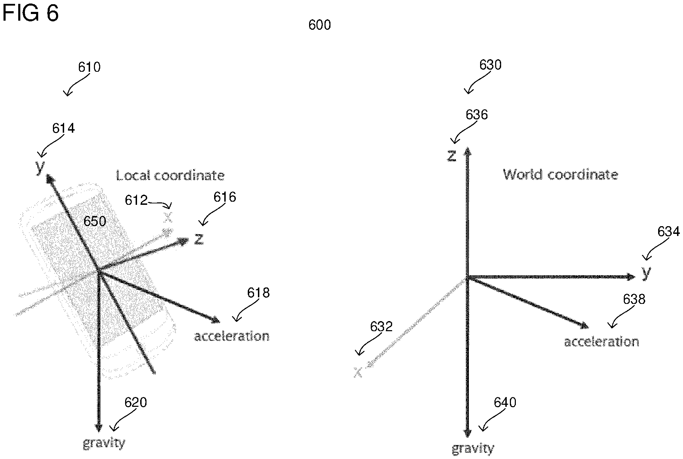

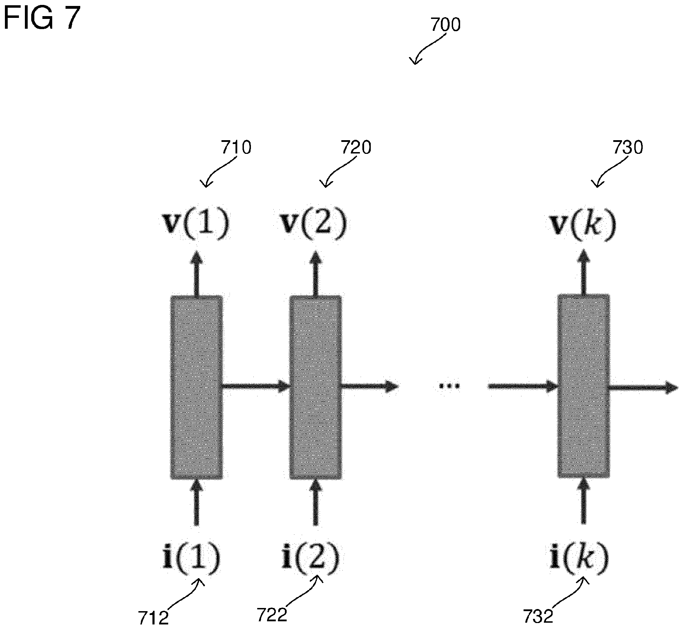

Method 500 may include pedestrian dead reckoning (PDR) module 510 and Wi-Fi module 530. PDR module 510 may include sensors, such as accelerometer 512 and gyroscope 514, orientation estimator 516, step detector or neural network 518, and trajectory estimation application 520. Other sensors may be included in PDR module 510. Orientation Estimator 516 may be used to transform coordinates of a wireless communication device to real-world coordinates as described in FIG. 6. Step detector 518 may include a parameterized machine learning algorithm to determine a wireless communication device location as described in FIG. 7.

Additionally, Wi-Fi module 530 may include a Wi-Fi communication device 532, a plurality of ranging modules 534, and a positioning application 536. Each ranging module 534 may include multiple parameters for a machine learning algorithm. The multiple parameters may require optimization. A ranging module 534 may be implemented between the Wi-Fi communication device 532 and multiple APs to determine the distance between the AP and the wireless communication device. The positioning application 536 may take the output of ranging modules 534 to determine a wireless communication device trajectory.

Both trajectory estimation application 520 and positioning application 536 may predict trajectories of the wireless communication device. Cost function 550 may compare the trajectory estimate from positioning application 520 to the trajectory estimate from trajectory estimation application 536. Cost function 550 may optimize parameters for the machine learning algorithm of step detector 518 based on the comparison of trajectory estimate from positioning application 520 to the trajectory estimate from trajectory estimation application 536. The optimized parameters are transferred to the step detector 518.

The step detector 518 may include a neural network with a parametric machine learning algorithm. Cost function 550 may optimize the parameters of the machine learning algorithm of step detector 518 based on the comparison of the two device trajectory predictions.

Two examples of sensor-based location tracking techniques include stepdown system and step-and-heading.

The stepdown system approach estimates the traveled distance by integrating acceleration twice (e.g., $d = \iint a \, dt$). To this end, it first rotates the acceleration values measured in the local coordinates system into the real-world coordinates system, and then, takes double integral of the transformed acceleration values.

The step-and-heading approach estimates the traveled distance from the variation pattern of the accelerometer values, and combines it with a separately estimated heading of the device to estimate the trajectory of the device.

Because the stepdown system approach relies on the integration of acceleration values, noise is quickly accumulated over time degrading performance and accuracy of the trajectory estimate.

In the step-and-heading approach, the solution separately estimates the traveled distance and the orientation, or direction of the heading. When the estimated heading direction does not match to the actual moving direction, this solution produces a significant error.

Both approaches may require corrections to adjust for errors or degradations. The following examples focus on the step-and-heading approach.

FIG. 6 shows an exemplary transformation of wireless communication device coordinates to real-world coordinates as may be implemented by orientation estimator 516 of FIG. 5. Wireless communication device 650 may include local coordinate system 610. The local coordinates are transformed into real-world coordinate system 630 to more accurately predict a wireless communication device orientation and ultimately its trajectory.

For example, X coordinate 612, Y coordinate 614, and Z coordinate 616 of the local coordinate system are transformed into an X coordinate 632, Y coordinate 634, and Z coordinate 636 of the real-world coordinate system. The orientation estimation algorithm may use acceleration measurement 618 and gravity 620 to transform X, Y, and Z coordinates from the local coordinate system. Acceleration 618 and gravity 620 should be substantially the same vectors 638 and 640 respectively in the real-world coordinate system 630, and may be used as references for transformation. There are many orientation algorithms that may be used for transformation. For example, orientation algorithms used in fitness applications, gaming applications, or rotate a device display.

Because sensor measurements are measured in the local (or wireless communication device) coordinates system, the local coordinates may need to be transformed into the real-world coordinates system. FIG. 6 shows the local and real-world coordinates systems. For the transformation, the orientation of the device should be known. There are many sensor fusion algorithms to estimate the orientation using sensors, such as accelerometer, gyroscope, and magnetometer. To obtain the orientation, any of a plurality of known orientation estimation algorithms may be used. Once the orientation of the device is known, a rotation matrix can be defined to express the rotation of the device along with each axis. The following equation may define a rotation matrix:

$$\mathbf{R} = \mathbf{R}_Z \mathbf{R}_X \mathbf{R}_Y = \begin{bmatrix} \cos\phi & -\sin\phi & 0 \\ \sin\phi & \cos\phi & 0 \\ 0 & 0 & 1 \end{bmatrix} \begin{bmatrix} 1 & 0 & 0 \\ 0 & \cos\theta & -\sin\theta \\ 0 & \sin\theta & \cos\theta \end{bmatrix} \begin{bmatrix} \cos\psi & 0 & -\sin\psi \\ 0 & 1 & 0 \\ \sin\psi & 0 & \cos\psi \end{bmatrix}$$

where $\phi$, $\theta$, $\psi$, represent the rotation angle around z, x, y axis, respectively (i.e., yaw, pitch, an droll). Let

$$\mathbf{a}^{(local)} = \left[ a_x^{(local)}, a_y^{(local)}, a_z^{(local)} \right]^T$$

denote the accelerometer vectors measured at the local coordinates system. Then the transformed accelerometer vector is given by:

$$\mathbf{a}^{(world)} = \mathbf{R} \cdot \mathbf{a}^{(local)}.$$

In order to indicate the accelerometer values at a specific time, one can add time step index to variables. For instance, $\mathbf{a}^{(world)}(k)$ represents the transformed accelerometer values at time step $k$.

Once the transformed accelerometer values are obtained, one can feed these values into the Neural Network (NN) to produce refined velocity for each axis. Among many NN architectures, one can deploy a recurrent NN (RNN) which produces output based not only on the current input data but also on previous input data. By doing so, RNN can capture the variation of input data over time and learn some patterns to produce better results.

FIG. 7 shows an exemplary representation of neural network (NN) 700, for example, the neural network 518 of FIG. 5. NN 700 may be a recurrent neural network (RNN) for velocity estimation of a wireless communication device. NN 700 may include an RNN structure, where there is an input and output for every step taken. For example, $\mathbf{i}(k)$, $\mathbf{v}(k)$ represent input and output layer at every time step $k$. The input layers 712, 722, and 732 may include any useful information, for example, a transformed accelerometer measurement value or a change in orientation between consecutive time steps. The RNN output 710, 720, and 730 may be based on inputs 712, 722, and 732 and used to determine a wireless communication device trajectory. To generate output 710, 720, and 730 based on the transformed accelerometer measurement values, the input layer can be represented by formula:

$$\mathbf{i}(k) = \mathbf{a}^{(world)}(k)$$

Outputs 710, 720, and 730 may further incorporate the change in orientation between consecutive time steps. To incorporate the change in orientation, input to the layer may be represented by formula:

$$\mathbf{i}(k) = \left[ a_x^{(world)}(k), a_y^{(world)}(k), a_z^{(world)}(k), \Delta\phi(k), \Delta\theta(k), \Delta\psi(k) \right]^T$$

where $\Delta\phi(k) = \phi(k) - \phi(k-1)$, $\Delta\theta(k) = \theta(k) - \theta(k-1)$, $\Delta\Psi(k) = \Psi(k) - \psi(k-1)$.

These are examples of input layers that could be used to produce outputs 710, 720, and 730. It should be understood that one can add more information or remove some elements from these examples.

The output of the RNN is a velocity of the wireless communication device in the real-world coordinates system at the time step $k$. It can be equivalently considered as traveled distance because the constant sampling intervals of sensors measurements. The velocity outputs at time step $k$ may be represented by formula:

$$\mathbf{v}(k) = \left[ v_x^{(world)}(k), v_y^{(world)}(k) \right]^T$$

Using the velocity outputs of the RNN, the trajectory estimation application may estimate the trajectory of the wireless communication device based on sensor measurement data. For example, the trajectory of the wireless communication device may be represented by the following formula:

$$\mathbf{z}(k) = \mathbf{z}(k-1) + \mathbf{v}(k)dT$$

for steps
$k = 1, 2, ...,$
where $\mathbf{z}(k) = [x(k), y(k)]^T$ is two dimensional coordinates of the wireless communication device at time step $k$ and $dT$ is the sampling interval of sensors. For simplicity, one can assume that $\mathbf{z}(0) = [0, 0]^T$

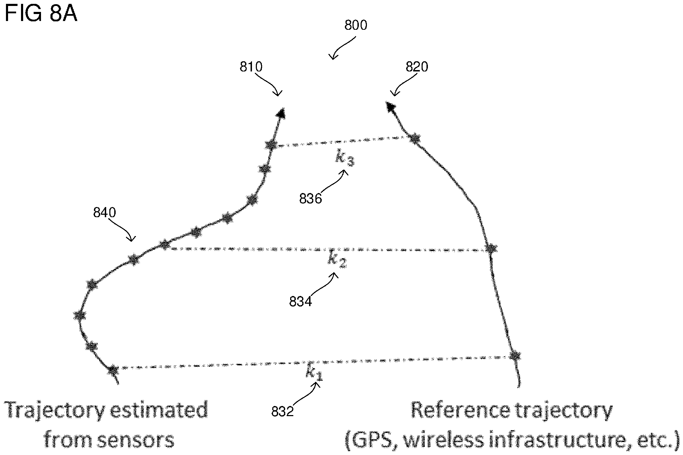

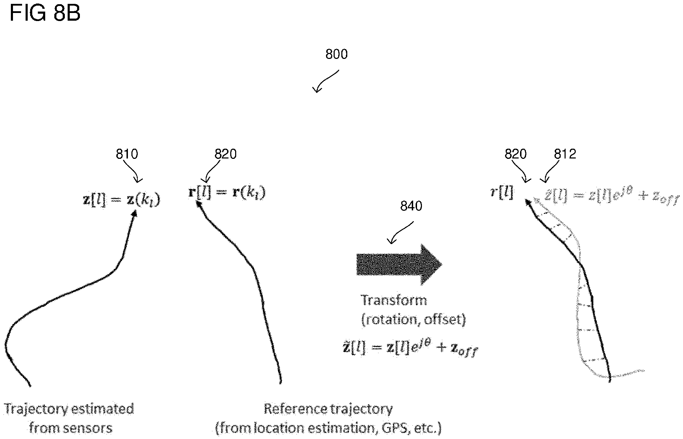

FIGS. 8A and 8B show reference trajectory 820 from a Wi-Fi module, such as Wi-Fi module 530, and an estimated trajectory 810 from a PDR module, such as PDR module 510. Trajectory 810 may be estimated using sensor measurements and reference trajectory 820 may be estimated using Wi-Fi ranging techniques. Time steps 832, 834, and 836 represent a corresponding points in time along both trajectories.

In order to verify that the proposed RNN is working properly, one may compare the trajectory 810 generated using the RNN with a reference trajectory 820. If GPS is available, one can obtain a ground truth trajectory using GPS. Otherwise, in an indoor environment, one can utilize a Wi-Fi signal to get a coarse reference trajectory 820 using the previous positioning techniques. Generally, sampling rates of sensors are much faster than the location update interval from GPS or wireless-based positioning, and thus estimated trajectory 810 has measurement points 840 than reference trajectory 820, where each measurement point is associated with a different point in time. Reference trajectory 820 does not have a corresponding measurement point for every measurement point of estimated trajectory 810. To compare the two trajectories, measurements at corresponding points in time are compared.

To sync the different times between two trajectories, $kl$, ($l$ = 1, 2, ...) is denoted as the time step index where the coordinates on the reference trajectory are available. For simplicity, the estimated and reference trajectories at time step $k1$, ... , $kL$ are denoted as

$$\mathbf{z}[l] = \mathbf{z}(k_l), \mathbf{r}[l] = \mathbf{r}(k_l), l = 1, \dots, L,$$

where $L$ is the number of points in the reference trajectory. Now one can compare the sampled trajectories $\mathbf{z}[l]$ and $\mathbf{r}[l]$, $l$ = 1, ... , $L$. However, the starting point and the orientation of these two sampled trajectories are different. For a fair comparison, one can transform the estimated trajectory 810 to reference trajectory 820 as shown in FIG 8B.

FIG. 8B shows a transformation of the estimated trajectory 812 to adjust starting point and orientation. For the transformation, a position offset $\mathbf{z}off = xoff + jyoff$ and a rotation angle $\theta$ is utilized and the transformed trajectory is represented by:

$$\tilde{\mathbf{z}}[l] = \mathbf{z}[l]e^{j\theta} + \mathbf{z}_{off}$$

To find an optimal offset and angle, one can define a cost function with respect to the offset and angle as follows:

$$J(\theta, z_{off}) = \sum_{l=1}^{L} |\tilde{z}[l] - r[l]|^2$$

$$= \sum_{l=1}^{L} \left(z[l]e^{j\theta} + z_{off} - r[l]\right)\left(z^*[l]e^{-j\theta} + z_{off}^* - r^*[l]\right),$$

$\mathbf{z}off$ can be estimated from equations

$$\frac{\partial J(\theta, z_{off})}{\partial x_{off}} = 0, \text{ and } \frac{\partial J(\theta, z_{off})}{\partial y_{off}} = 0$$

and the optimal value is given by:

$$\hat{z}_{off} = \frac{1}{L}\left(\sum_{l=1}^{L} r[l] - e^{j\theta}\sum_{l=1}^{L} z[l]\right)$$

With this optimal offset, the cost function can be evaluated as

$$J\left(\theta, \hat{z}_{off}\right) = e^{j\widehat{\theta}} \left( \frac{\sum_{l=1}^{L} \mathbf{r}^{*}[l] \sum_{l=1}^{L} \mathbf{z}[l]}{L} - \sum_{l=1}^{L} \mathbf{r}^{*}[l]\mathbf{z}[l] \right)$$

$$- e^{-j\widehat{\theta}} \left( \frac{\sum_{l=1}^{L} \mathbf{r}[l] \sum_{l=1}^{L} \mathbf{z}^{*}[l]}{L} - \sum_{l=1}^{L} \mathbf{r}[l]\mathbf{z}^{*}[l] \right) + J_{res}$$

where $J_{res}$ represents the residual terms which are not related to $\theta$.
From this derivation, one can obtain an optimal $\theta$ which is given by:

$$\widehat{\theta} = -angle\left( \frac{\sum_{l=1}^{L} \mathbf{r}^{*}[l] \sum_{l=1}^{L} \mathbf{z}[l]}{L} - \sum_{l=1}^{L} \mathbf{r}^{*}[l]\mathbf{z}[l] \right)$$

Once the optimal angle and offset (i.e., $\theta^{\wedge}$, $\hat{z}_{off}$) are calculated, the cost function for training the proposed RNN can be defined as follows:

$$J = J\left(\widehat{\theta}, \hat{\mathbf{z}}_{off}\right).$$

Therefore, the parameters in the RNN is optimized in direction of minimizing the above cost function.

The unsupervised learning technique using sensor data generated inside a mobile device is disclosed. As built-in sensors on the device, such as accelerometer and gyroscope, can detect the motion of the device, the sensor measurement results may be used to obtain the trajectory of the device using a sensor fusion technique called the pedestrian dead reckoning (PDR). Therefore, the estimated trajectory using PDR technique can be trained using Wi-Fi ranging data to improve the accuracy of the estimation. Because this method does not need to collect ground truth data, such as distance or coordinates of the device, an abundant amount of training data can be easily collected when device applications are used.

To account for limitations in tracking the trajectory of a wireless communication device due to noise from MEMS sensor measurements, orientation and traveled distance may be estimated separately. For example, an orientation may be determined from gyroscope sensor measurements of a wireless communication device. A traveled distance may be determined from an accelerometer sensor measurement pattern of a wireless communication device.

However, the previously mentioned approaches may yield incorrect results if the direction of movement is not aligned with the orientation of the wireless communication device. Machine learning techniques may improve trajectory estimates based on sensor measurements with Wi-Fi ranging data. For example, a NN may identify patterns generated when the wireless communication device is in motion. The NN takes raw sensor measurements and generates a velocity value of the wireless communication device based on the sensor measurements without the sensor measurement noise. The NN estimates the trajectory of the wireless communication device accumulating outputs of the NN, such as outputs 710, 720, and 730 over time.

Machine learning techniques may play a meaningful role in estimating the trajectory of the device with low-cost sensors. Neural networks (NN) may be deployed to identify patterns generated when the device is moving. The NN may take raw sensor measurements and produce a refined velocity with removed measurement noise. Therefore, the trajectory of the device can be estimated accumulating the output of the NN over time. One of the most time-consuming tasks for deploying machine learning technique is collecting sufficient amounts of training data. For instance, the true coordinates of the device in this situation may need to be collected, and it may generally require additional equipment such as a special robot or Lidar.

Measurement campaigns were performed under practical indoor office environments to demonstrate the previously described methods.

A first measurement campaign was conducted in a practical indoor office environment with 59 Wi-Fi APs installed in the ceiling. A laptop running on Ubuntu 18.04 operating system was used for the experiment. For sensor measurement, an external USB sensor stick was used.

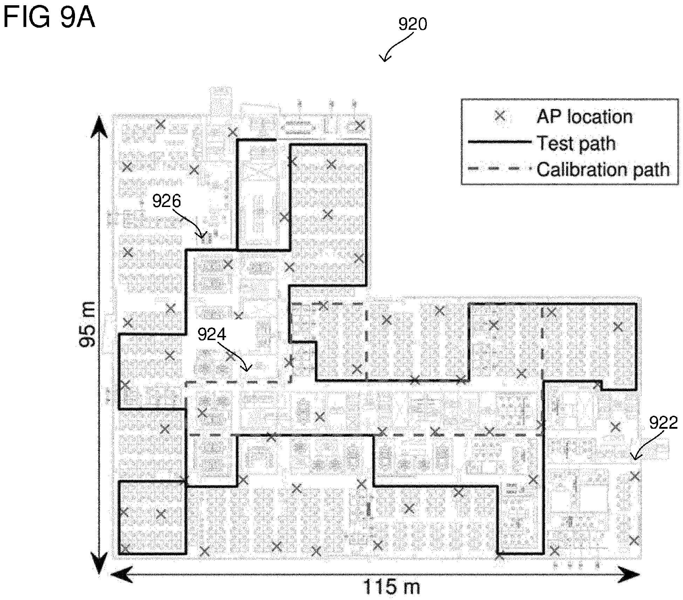

FIG. 9A shows the environment 900 with AP locations 922. The environment was measured with the laptop used, gathering Wi-Fi signal measurements and sensor measurements. For the purpose of performance comparisons, path loss-based ranging scenarios were considered, which estimate the distance from an AP as

$$\hat{d}^{PL} = d_0 10^{\frac{RSS(d_0)-RSS}{10\eta}}$$

where RSS(d0) represents the received signal strength at a reference distance denoted by d0, RSS is the received signal strength (RSS) from an AP, and $\eta$ is the path loss exponent.

Parameters in the path loss model were optimized using calibration data collected by following the calibration path 924. The collected data include the true x, y coordinates of the device and RSS received from nearby APs at each coordinate.

However, such labeled data were not used to verify the performance of the proposed learning technique. For proposed learning technique, a fully connected (FC) neural network was deployed, which has 2 layers each with 128 hidden nodes. Training data was collected by randomly moving around the indoor site for 30 minutes to mimic that users use a positioning application in practice. Without collecting the ground truth coordinates of the device, one can train the ranging module using the cost function designed in this disclosure. An extended Kalman filter (EKF)-based ranging module was used. In addition, the FC-based ranging module was trained using the sensor-aided cost function introduced in this disclosure, and using unsupervised learning technique. By doing so, one can verify the effectiveness of this disclosure.

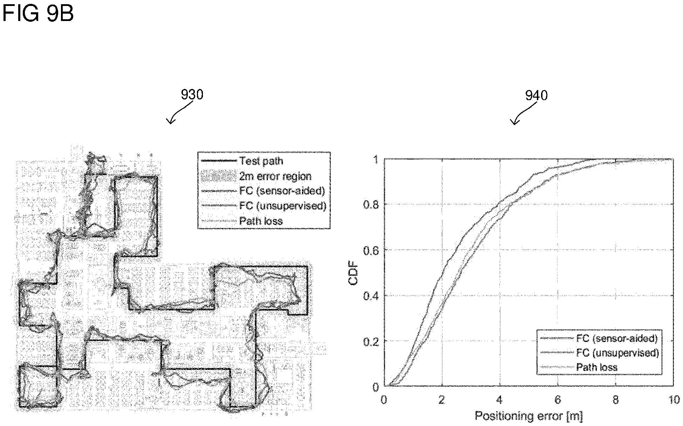

FIG. 9B shows the estimated trajectories 930 for each ranging scenario and the cumulative density function (CDF) 940 of the positioning error. Even though no ground truth data was used, the positioning performance with FC-based ranging scenarios outperformed the performance with path loss-based ranging. When sensor data is used in the training phase, the module produced an improved positioning estimate.

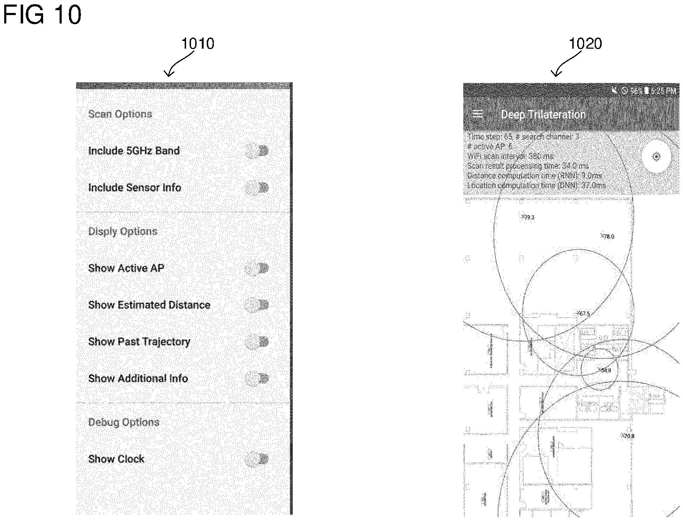

An additional experiment was conducted to verify the feasibility of the disclosure. FIG. 10 shows a prototype application 1010 implemented according to an aspect of this disclosure. Application 1010 may periodically scan nearby Wi-Fi beacon transmissions 1020 to obtain the location of the wireless communication device using trilateration techniques. At the same time, application 1010 obtains sensor measurement values (i.e., accelerometer, gyroscope, and magnetometer). An RNN, takes the sensor measurement values as input to predict a trajectory. For example, a 1 layer RNN with long short-term memory (LSTM) unit with 50 hidden nodes.

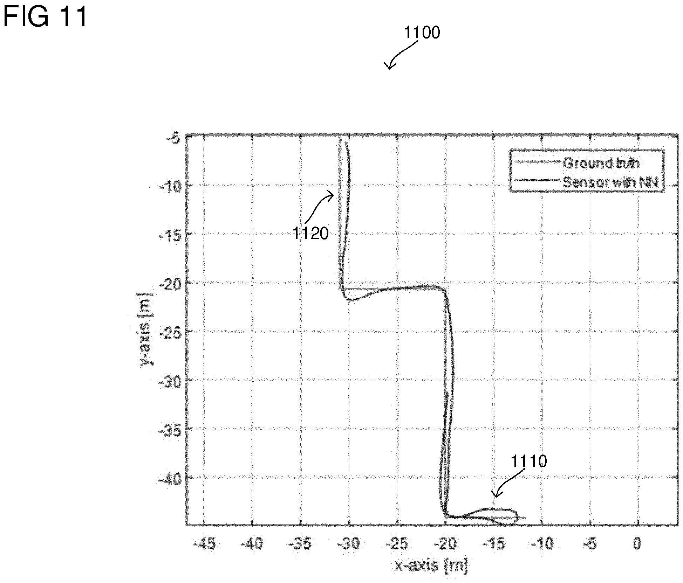

FIG. 11 shows the results for the prototype application 1010. The estimated trajectory 1110 based on sensor measurement data is overlaid over ground truth trajectory 1120. Even though the RNN was trained with reference trajectory obtained using Wi-Fi signal measurements, as opposed to ground truth data, the trained RNN produces quite accurate results where the average positioning error is less than 1 meter.

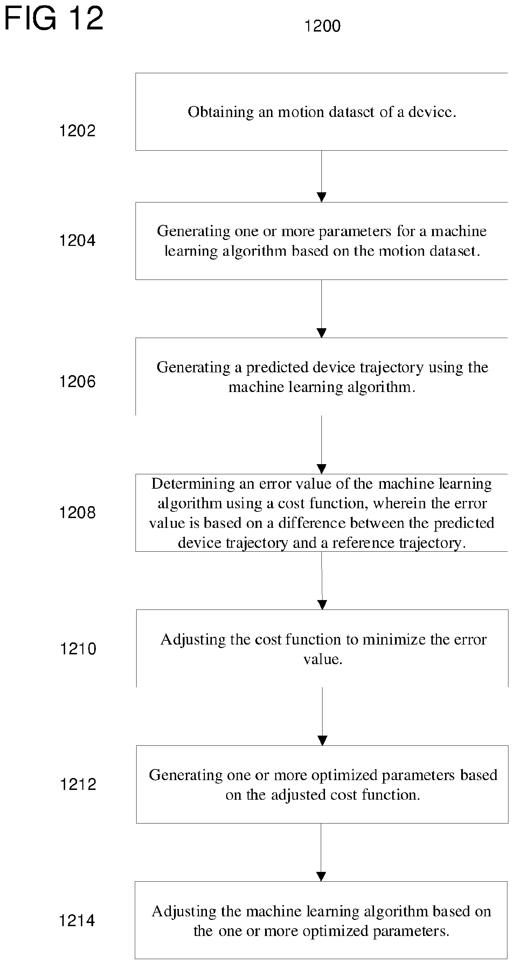

FIG. 12 shows exemplary method 1200 of estimating a wireless communication device trajectory. As shown in FIG. 12, method 1200 includes obtaining an motion dataset of a device (stage 1202), generating one or more parameters for a machine learning algorithm based on the motion dataset (stage 1204), generating a predicted device trajectory using the machine learning algorithm (stage 1206), determining an error value of the machine learning algorithm using a cost function, wherein the error value is based on a difference between the predicted device trajectory and a reference trajectory (stage 1208), adjusting the cost function to minimize the error value (stage 1210), generating one or more optimized parameters based on the adjusted cost function (stage 1212), and adjusting the machine learning algorithm based on the one or more optimized parameters (stage 1214).

In the following, various aspects of the present disclosure will be illustrated:

Example 1 is a device including one or more processors configured to obtain an motion dataset of the device; generate one or more parameters for a machine learning algorithm based on the motion dataset; generate a predicted device trajectory using the machine learning algorithm; determine an error value of the machine learning algorithm using a cost function, wherein the error value is based on a difference between the predicted device trajectory and a reference trajectory; adjust the cost function to minimize the error value; generate one or more optimized parameters based on the adjusted cost function; and adjust the machine learning algorithm based on the one or more optimized parameters.

In Example 2, the subject matter of Example 1, may optionally further include wherein the machine learning algorithm comprises a neural network.

In Example 3, the subject matter of any one of Examples 1 or 2, may optionally further include wherein the neural network is a recurrent neural network.

In Example 4, the subject matter of any one of Examples 1 to 3, may optionally further include wherein the motion dataset is unlabeled training data.

In Example 5, the subject matter of any one of Examples 1 to 4, may optionally further include wherein the cost function is configured to minimize the difference between the predicted device trajectory and the reference device trajectory.

In Example 6, the subject matter of any one of Examples 1 to 5, may optionally further include wherein the difference comprises at least one comparison between the predicted device trajectory and the reference trajectory at a corresponding point in time.

In Example 7, the subject matter of any one of Examples 1 to 6, may optionally further include wherein the cost function generates the one or more optimized parameters.

In Example 8, the subject matter of any one of Examples 1 to 7, may optionally further include wherein the one or more processors are further configured to generate a further predicted device trajectory based on the optimized parameters.

In Example 9, the subject matter of any one of Examples 1 to 8, may optionally further include wherein the cost function comprises a rotation of the predicted trajectory into the coordinate system of the reference trajectory.

In Example 10, the subject matter of any one of Examples 1 to 9, may optionally further include wherein the motion dataset is based on device sensor measurement data; and the reference trajectory is based on Wi-Fi ranging measurement data.

In Example 11, the subject matter of any one of Examples 1 to 10, may optionally further include wherein the motion dataset is based on Wi-Fi ranging measurement data; and the reference trajectory is based on device sensor measurement data.

In Example 12, the subject matter of any one of Examples 1 to 11, may optionally further include wherein the device sensor measurement data comprises an accelerometer measurement data.

In Example 13, the subject matter of any one of Examples 1 to 12, may optionally further include wherein device sensor measurement data comprises a gyroscope measurement data.

In Example 14, the subject matter of any one of Examples 1 to 13, may optionally further include wherein the one or more processors are further configured to determine an orientation of the device.

In Example 15, the subject matter of any one of Examples 1 to 14, may optionally further include wherein the Wi-Fi ranging measurement data comprises a distance between the device and a Wi-Fi access point.

In Example 16, the subject matter of any one of Examples 1 to 15, may optionally further include wherein the Wi-Fi ranging measurement data comprises at least three distances between the device and at least three Wi-Fi access points.

In Example 17, the subject matter of any one of Examples 1 to 16, may optionally further include wherein the rotation comprises a rotation angle along each axis of the coordinate system.

Example 18 is a device including a memory configured to store instructions; one or more processors coupled to the memory to execute the instructions stored thereon, where the instructions are configured to obtain an motion dataset of the device; generate one or more parameters for a machine learning algorithm based on the motion dataset; generate a predicted device trajectory using the machine learning algorithm; determine an error value of the machine learning algorithm using a cost function, wherein the error value is based on a difference between the predicted device trajectory and a reference trajectory; adjust the cost function to minimize the error value; generate one or more optimized parameters based on the adjusted cost function; and adjust the machine learning algorithm based on the one or more optimized parameters.

In Example 19, the subject matter of Example 18, may optionally further include any one of the Examples 2-17.

Example 20 is a method including is obtaining an motion dataset of a device; generating one or more parameters for a machine learning algorithm based on the motion dataset; generating a predicted device trajectory using the machine learning algorithm; determining an error value of the machine learning algorithm using a cost function, wherein the error value is based on a difference between the predicted device trajectory and a reference trajectory; adjusting the cost function to minimize the error value; generating one or more optimized parameters based on the adjusted cost function; and adjusting the machine learning algorithm based on the one or more optimized parameters.

In Example 21, the subject matter of Example 20, may optionally further include wherein the machine learning algorithm comprises a neural network.

In Example 22, the subject matter of any one of Examples 20 or 21, may optionally further include wherein the neural network is a recurrent neural network.

In Example 23, the subject matter of any one of Examples 20 to 22, may optionally further include wherein the motion dataset is unlabeled training data.

In Example 24, the subject matter of any one of Examples 20 to 23, may optionally further include wherein the cost function is configured to minimize the difference between the predicted device trajectory and the reference device trajectory.

In Example 25, the subject matter of any one of Examples 20 to 24, may optionally further include wherein the difference comprises at least one comparison between the predicted device trajectory and the reference trajectory at a corresponding point in time.

In Example 26, the subject matter of any one of Examples 20 to 25, may optionally further include wherein the cost function generates the one or more optimized parameters.

In Example 27, the subject matter of any one of Examples 20 to 26, may optionally further include generating a further predicted device trajectory based on the optimized parameters.

In Example 28, the subject matter of any one of Examples 20 to 27, may optionally further include wherein the cost function comprises a rotation of the predicted trajectory into the coordinate system of the reference trajectory.

In Example 29, the subject matter of any one of Examples 20 to 28, may optionally further include wherein the motion dataset is based on device sensor measurement data; and the reference trajectory is based on Wi-Fi ranging measurement data.

In Example 30, the subject matter of any one of Examples 20 to 29, may optionally further include wherein the motion dataset is based on Wi-Fi ranging measurement data; and the reference trajectory is based on device sensor measurement data.

In Example 31, the subject matter of any one of Examples 20 to 30, may optionally further include wherein the device sensor measurement data comprises an accelerometer measurement data.

In Example 32, the subject matter of any one of Examples 20 to 31, may optionally further include wherein device sensor measurement data comprises a gyroscope measurement data.

In Example 33, the subject matter of any one of Examples 20 to 32, may optionally further include wherein the one or more processors are further configured to determine an orientation of the device.

In Example 34, the subject matter of any one of Examples 20 to 33, may optionally further include wherein the Wi-Fi ranging measurement data comprises a distance between the device and a Wi-Fi access point.

In Example 35, the subject matter of any one of Examples 20 to 34, may optionally further include wherein the Wi-Fi ranging measurement data comprises at least three distances between the device and at least three Wi-Fi access points.

In Example 36, the subject matter of any one of Examples 20 to 35, may optionally further include wherein the rotation comprises a rotation angle along each axis of the coordinate system.

Example 37 is a system including one or more devices according to Examples 1 to 19 configured to implement a method according to Examples 20 to 36.

Example 38 is one or more non-transitory computer readable media comprising programmable instructions thereon, that when executed by one or more processors of a device, cause the device to perform any one of the method of Examples 20 to 36.

Example 39 is a means for implementing any of the Examples 1 to 19.

While the above descriptions and connected figures may depict device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all Examples included herein.

**Claims**

1. A device comprising:
   one or more processors configured to:

   obtain a motion dataset of the device;
   generate one or more parameters for a machine learning algorithm based on the motion dataset;
   generate a predicted device trajectory using the machine learning algorithm;
   determine an error value of the machine learning algorithm using a cost function, wherein the error value is based on a difference between the predicted device trajectory and a reference trajectory; adjust the cost function to minimize the error value;
generate one or more optimized parameters based on the adjusted cost function; and
adjust the machine learning algorithm based on the one or more optimized parameters.

2. The device of claim 1, wherein the machine learning algorithm comprises a neural network.

3. The device of any one of claims 1 or 2, wherein the motion dataset is unlabeled training data for training the neural network.

4. The device of any one of claims 1 to 3, wherein the cost function is configured to minimize the difference between the predicted device trajectory and the reference device trajectory.

5. The device of any one of claims 1 to 4, wherein the difference comprises at least one comparison between the predicted device trajectory and the reference trajectory at a corresponding point in time.

6. The device of any one of claims 1 to 5, wherein the cost function comprises a rotation of the predicted trajectory into the coordinate system of the reference trajectory.

7. The device of any one of claims 1 to 6, wherein the motion dataset is based on device sensor measurement data; and the reference trajectory is based on Wi-Fi ranging measurement data.

8. The device of claim 7, wherein the Wi-Fi ranging measurement data comprises a distance between the device and a Wi-Fi access point.

9. The device of any one of claims 1 to 6, wherein the motion dataset is based on Wi-Fi ranging measurement data; and the reference trajectory is based on device sensor measurement data.

10. The device of claim 9, wherein the device sensor measurement data comprises an accelerometer measurement data.

11. A method comprising:

obtaining a motion dataset of a device;
generating one or more parameters for a machine learning algorithm based on the motion dataset;
generating a predicted device trajectory using the machine learning algorithm; determining an error value of the machine learning algorithm using a cost function, wherein the error value is based on a difference between the predicted device trajectory and a reference trajectory;
adjusting the cost function to minimize the error value;
generating one or more optimized parameters based on the adjusted cost function; and
adjusting the machine learning algorithm based on the one or more optimized parameters.

12. The method of claim 11, wherein the motion dataset is based on device sensor measurement data; and the reference trajectory is based on Wi-Fi ranging measurement data.

13. The method of claim 11, wherein the motion dataset is based on Wi-Fi ranging measurement data; and the reference trajectory is based on device sensor measurement data.

14. The method of any one of claims 12 or 13 wherein the Wi-Fi ranging measurement data comprises at least three distances between the device and at least three Wi-Fi access points.

15. Machine-readable storage including machine readable instructions, when executed, to implement a method or realize a device as claimed in any preceding claim.

# FIG 1

100

104

102

102

106

FIG 2

FIG 3

300

310

ACC   312

GYRO   314

316 Orientation estimation

318 Step detector

320

Trajectory estimation

PDR module

Gradient propagation

Cost   350

Wi-Fi module

Wi-Fi   332

334

Ranging

336

Positioning

330

# FIG 4

400

FIG 5

500

510

| 512 Accelerometer | | 518 Neural Networks | | 520 Trajectory from sensor |
| 516 | | | | |
| 514 Gyroscope | Preprocessing (orientation estimation) | | | |

Back propagation

550 Cost calculation

| 532 Wi-Fi or GPS | | 534 Coarse trajectory estimation [2,3,4] | | 536 Reference trajectory |

530

FIG 6

600

610

614

y

Local coordinate

612

616

650

z

618

acceleration

620

gravity

630

636

z

World coordinate

634

y

638

632

x

acceleration

640

gravity

FIG 7

FIG 8A

Trajectory estimated
from sensors

Reference trajectory
(GPS, wireless infrastructure, etc.)

FIG 8B

800

810

$\mathbf{z}[l] = \mathbf{z}(k_l)$

820

$\mathbf{r}[l] = \mathbf{r}(k_l)$

840

Transform
(rotation, offset)

$$\tilde{\mathbf{z}}[l] = \mathbf{z}[l]e^{j\theta} + \mathbf{z}_{off}$$

820    812

$r[l]$    $\tilde{z}[l] = z[l]e^{j\theta} + z_{off}$

Trajectory estimated
from sensors

Reference trajectory
(from location estimation, GPS, etc.)

FIG 9A

FIG 9B

930

940

Test path
2m error region
FC (sensor-aided)
FC (unsupervised)
Path loss

FC (sensor-aided)
FC (unsupervised)
Path loss

CDF

Positioning error [m]

# FIG 10

1010

1020

FIG 11

# FIG 12

1200

1202 → Obtaining an motion dataset of a device.

1204 → Generating one or more parameters for a machine learning algorithm based on the motion dataset.

1206 → Generating a predicted device trajectory using the machine learning algorithm.

1208 → Determining an error value of the machine learning algorithm using a cost function, wherein the error value is based on a difference between the predicted device trajectory and a reference trajectory.

1210 → Adjusting the cost function to minimize the error value.

1212 → Generating one or more optimized parameters based on the adjusted cost function.

1214 → Adjusting the machine learning algorithm based on the one or more optimized parameters.

Europäisches
Patentamt

European
Patent Office

Office européen
des brevets

# EUROPEAN SEARCH REPORT

Application Number

EP 20 21 4977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/362237 A1 (CHOI JEONGSIK [US] ET AL) 28 November 2019 (2019-11-28) * paragraph [0041] - paragraph [0074]; claim 1; figures 7, 8 * ----- | 1-5,7-15 | INV. G06N3/08 |
| X | US 2019/384303 A1 (MULLER URS [US] ET AL) 19 December 2019 (2019-12-19) * paragraph [0067] - paragraph [0189]; figures 5A, 5B * ----- | 1-15 | |

TECHNICAL FIELDS
SEARCHED      (IPC)

G06N

The present search report has been drawn up for all claims

| Place of search | Date of completion of the search | Examiner |
|---|---|---|
| Munich | 31 May 2021 | Cordara, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 4977

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2021

| Patent document cited in search report | Publication date | Patent family member(s) | Publication date |
|---|---|---|---|
| US 2019362237 A1 | 28-11-2019 | NONE | |
| US 2019384303 A1 | 19-12-2019 | CN 110618678 A | 27-12-2019 |
| | | US 2019384303 A1 | 19-12-2019 |

For more details about this annex : see Official Journal of the European Patent Office, No. 12/82

EPO FORM P0459